# DEMANDE DE BREVET EUROPEEN

(11) **EP 0 857 642 A1**
(43) Date de publication de la demande: **12.08.1998**
(21) Numéro de dépôt: 98400172.7
(22) Date de dépôt: 28.01.1998
(51) Int. Cl.: B62J 19/00

(54) **Dispositif de protection des véhicules à deux roues**

(30) Priorité: 06.02.1997 FR 9701352
(71) Demandeur: Dalmasso, Marc, 94140 Alfortville (FR)
(72) Inventeur: Dalmasso, Marc, 94140 Alfortville (FR)
(74) Mandataire: Vander-Heym, Serge

(57) **Abrégé**

Dispositif pour protéger les véhicules à deux roues , des intempéries , pollutions , poussières , vols , rayures ,vandalisme .

Dispositif caractérisé par le fait qu'il est fixé et intégré en permanence aux véhicules à deux roues , en utilisation ou hors d'utilisation .

Disositif constitué d'un , ou plusieurs réceptcacles **(1-2)**, fixés ou amovibles , intégrés ou fixés à un tapis de réservoir **(3)** , ou à toutes autres parties d'un véhicule à deux roues .

Dispositif constitué d'un ou plusieurs réceptacles , contenant une , ou plusieurs housses de protection **(6-7) ,** rattachées à ceux ci **(5)**.
Housse amovible , ayant pour particularités par sa matière, sa forme , sa taille , ses moyens de fixations **(4)** , d'être rapidement déployée , maintenue , et fixée sur les parties à protéger d'un véhicule à deux roues .

## Description

**La présente invention est relative à la protection des véhicules à deux roues** :
A- des intempéries : pluie , neige , froid etc
B- des pollutions ou agressions extérieures : poussières , rayures, vandalisme , vol des accessoires etc
en effet les véhicules à deux roues ont pour inconvénient de n'avoir pas de carrosserie fermée permettant de protéger en particulier : les commandes de conduite les instruments de contrôle , la zone d'assise , la selle , les élèments de carrosserie etc .
A ce jour il n'existe aucun dispositif de protection connu , intégré aux véhicules à deux roues suceptible de pallier à ces inconvénients de façon simple, rapide , aisé à transporter et à mettre en oeuvre.
La présente invention à pour but de résoudre ces différents inconvénients.

**La présente invention sera mieux comprise par la description qui va suivre , et, en se référant aux dessins et figures annexés à titres indicatifs ; (1-3)(2-3)(3-3) .**

A la conception et à la fabrication du tapis de réservoir **(3)**, sont prévus un , ou plusieurs emplacements faisants offices de réceptacles (**1 et 2** )destinés à contenir une housse ( hors d' utilisation )
Cette housse en étant extraite du réceptacle et déployée , sera positionnée et maintenue (**4),** sur les parties à protéger du véhicule à deux roues **(6 et 7)** ( en utilisation ).

En utilisation , une extrémité de la housse restera fixée au réceptacle , afin d'assurer son maintein .**(5)**
La housse , afin qu'elle soit amovible ou remplacable de son réceptacle , sera fixée et reliée à celui ci par des moyens comme : attaches rapides plastique ( ou autres matières ) bandes velcro , fermetures à glissière ou tous autres moyens assurants un bon maintien de la housse dans son réceptacle .
Comme revendique au paragraphe N° 2 , si le ou les réceptacles ne sont pas intégrés à la fabrication du tapis ou de la protection de réservoir ,
il est prévu d'adapter sur ces supports une sorte de poche faisant office de réceptacle .
La fixation de cette ( s) poche (s) sera assurée par tous moyens permettants une fixation sécurisée et efficace comme : rivets , boutons pressions , boucles nylons et dérivées , sangles , velcros , fermetures à glissières etc

La , ou les matières de la housse et de son réceptacle qui seront définivement retenues , devront être étanches , souples , légères , solides , résister aux basses comme aux hautes températures .
Si cette housse , ou son réceptacle , son constituée d'une seule matière , ou de plusieurs , qu'ils faillent rattacher entre elles , ce rattachement s'opérera par l'intermédiaire de coutures qui pourront être rendues étanches , exemples : en les soudants , en posant un film thermo- colle etc .
Ces matières pourront être : le nylon et ses dérivées, le pvc , le skai, le polyuréthane , les non tissés etc
Des matières naturelles comme le cuir , le coton etc ne sont pas à exclures .
Il est prévu d'inclure aux réceptacles , une ou des ouvertures favorisant les écoulements d'eau , le séchage et la ventilation de l'ensemble réceptacle , housse .

## Revendications

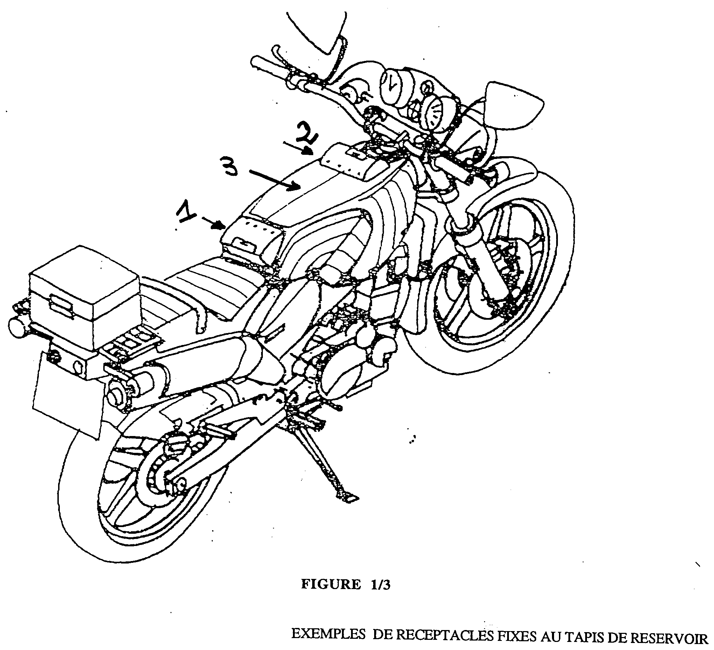

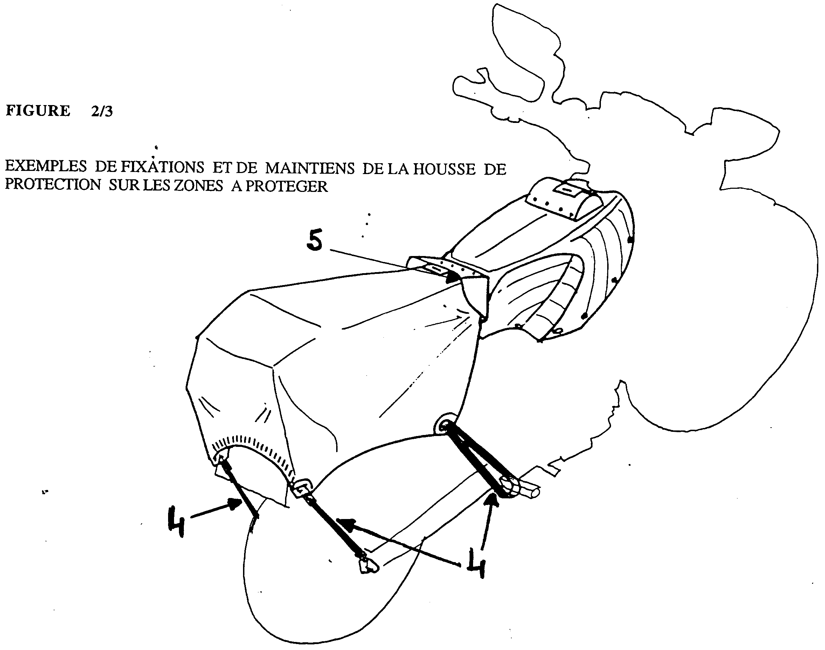

1. Dispositif permettant la protection des véhicules à deux roues des intempéries , des poussières , des pollutions , du vandalisme , du vol des accessoires etc, caractérisé en ce qu'il est fixé en permanance en utilisation ou hors d'utilisation,**par l'intermédiaire d'un tapis ou d'une protection de reservoir** sur les véhicules à deux roues , afin de permettre son transport et sa mise en oeuvre **(fig 1 et 2)** .

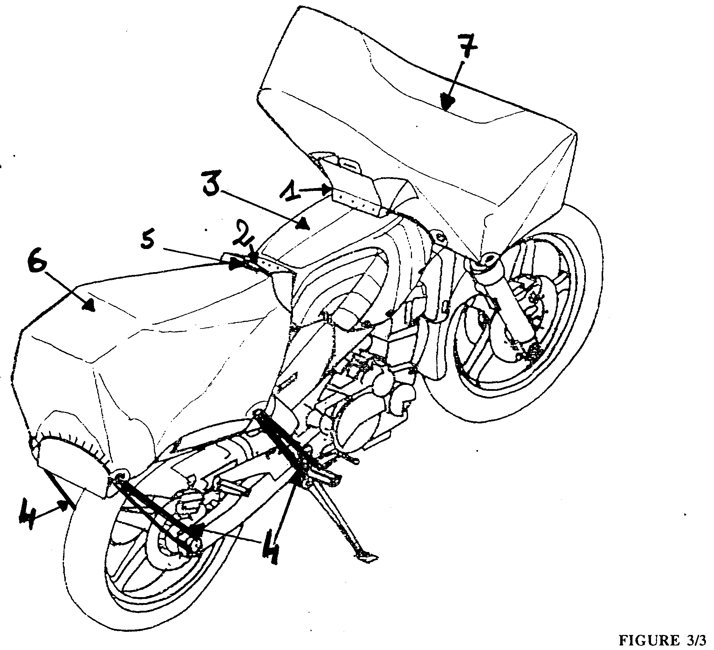

2. Dispositif, selon la revendication une, caractérisé en ce que sa fixation sur les véhicules à deux roues peut etre effectuée sur ou par l'intermédiaire d'un tapis ou d'une protection de réservoir **(fig 3),** ou tous autres supports pouvant se fixer se fixer sur un réservoir .

3. Dispositif selon l'une quelconque des revendications précédentes caractérisé en ce que en utilisation **(fig 6,7),** une extrémité de la housse restera fixe dans le receptacle afin d'assurer son maintien **(fig 5)**.

4. Dispositif selon l'une quelconque des revendications précédentes , caractérisé par le fait que le maintien des autres extrémités de la housse de protection sur les éléments à protéger du véhicule à deux roues , sera assuré selon les cas , par des moyens de tensions et de fixations comme : bandes élastiques , tendeurs, sandows, crochets etc **(4)** .

5. Dispositif selon l'une quelconque des revendications précédentes , caractérisé par le fait que l'extrémité de la housse fixée au réceptacle est détachable , afin que cette housse puisse être enlevée , ou remplacée , exemple en cas de déteroration .

6. Dispositif selon l'une quelconque des revendications précédentes , caractérisé par le fait que pour les tapis , ou protection de réservoir n'intégrant pas à la fabrication la présente invention , il est prévu d'adapter sur ces supports,un ou plusieurs réceptacles sous la forme par exemple d'une sorte de poche réceptacle contenant la housse .
